Europäisches Patentamt

European Patent Office

Office européen des brevets

(11) Veröffentlichungsnummer: **0 235 765**
**A1**

(12) **EUROPÄISCHE PATENTANMELDUNG**

(21) Anmeldenummer: 87102840.3

(22) Anmeldetag: 27.02.87

(51) Int. Cl.4: **H04M 9/08** , H04B 3/21

(30) Priorität: 03.03.86 DE 3606844

(43) Veröffentlichungstag der Anmeldung:
09.09.87 Patentblatt 87/37

(84) Benannte Vertragsstaaten:
AT BE CH DE ES FR GB GR IT LI LU NL SE

(71) Anmelder: Head Stereo GmbH, Kopfbezogene
Aufnahme- und Wiedergabetechnik & Co.
Messtechnik KG
Menzelstrasse 1
D-8000 München 40(DE)

(72) Erfinder: Genuit, Klaus, Dr.
Wildbacher Mühle 77
D-5100 Aachen(DE)

(74) Vertreter: Otte, Peter, Dipl.-Ing.
Tiroler Strasse 15
D-7250 Leonberg(DE)

(54) Einrichtung zur Verbesserung der Rückhördämpfung bzw. Schleifenverstärkung bei
Gegensprecheinrichtungen.

(57) Bei einer Einrichtung zur Verbesserung der Rückhördämpfung bzw. der Schleifenverstärkung bei Gegensprechanlagen, bei der jeweils mindestens zwei Filter mit kammfilterähnlicher Struktur - (1a,2a,1b,2b), jedoch gegeneinander versetzten Durchlaß-und Sperrbereichen eine Kettenschaltung bilden und dadurch die gesamte Schleifendämpfung vergrößern, wird vorgeschlagen, die Durchlaß-und Sperrbereiche der Filter in einem nichtharmonischen Verhältnis anzuordnen, mit zunehmender Frequenz eine wachsende Sperrdämpfung zu realisieren und ferner die jeweiligen Durchlaß-und Sperrbereiche der Bandpaßfilter deutlich kleiner als 1/2 Terz auszulegen. Schließlich können noch diejenigen Spektralanteile, die in einem Sperrbereich liegen, in die nächsten benachbarten Durchlaßbereiche verschoben und den durchgelassenen Spektralanteilen hinzuaddiert werden. Vorzugsweise weist jede Sprechstelle zwei Filter unterschiedlicher Struktur auf, so daß die Sprechwege jeweils eine gegebene, allerdings unterschiedliche Übertragungsfunktion aufweisen, während die Übertragungsfunktion für die akustische und elektrische Rückhördämpfung praktisch Null ist.

Fig.1

Xerox Copy Centre

## Einrichtung zur Verbesserung der Rückhördämpfung bzw. Schleifenverstärkung bei Gegensprecheinrichtungen

Stand der Technik

Die Erfindung geht aus von einer Einrichtung zur Verbesserung der Rückhördämpfung bzw. der Schleifenverstärkung nach der Gattung des Hauptanspruchs.

Bei einer bekannten Schaltungsanordnung dieser Art, die insbesondere für Zweidraht-oder Vierdrahtverstärker in Fernmeldeleitungen, insbesondere Fernsprechleitungen zur Übertragung von Nachrichten bestimmt ist, enthalten die beiden Stromzweige zur Erzielung einer rückkopplungsfreien Übertragung ein oder mehrere elektrische Filter, beispielsweise Siebketten, deren Durchlässigkeitsbereiche innerhalb des für eine Nachrichtenübertragung notwendigen Frequenzbandes liegen und die so verteilt sind, daß die Durchlässigkeitsbereiche der Filter des einen Übertragungszweigs mit den Sperrbereichen der Filter des anderen Zweiges zusammenfallen, so daß von den den Nachrichten der einen Richtung zugehörigen Frequenzen vorwiegend diejenigen unterdrückt werden, die von den Nachrichten der anderen Richtung durchgelassen werden. Die Filter können dabei so ausgebildet sein, daß jedes einzelne Filter eines jeden Stromzweiges für mehrere Frequenzbänder durchlässig ist.

Bei einer ähnlichen Schaltungsanordnung für elektroakustische Übertragungsanlagen, insbesondere Gegensprechanlagen, ist es ferner bekannt, bis zu einer bestimmten, als kritischen Pegel bezeichneten Verstärkung, ab welchem dann normalerweise Selbsterregung durch akustische Rückkopplung eintreten würde, die Übertragungswege von Filtermitteln oder Entzerrungsmitteln freizuhalten, bei Überschreiten dieses Pegels jedoch die Übertragungskanäle so zu - schalten, daß dann nur noch bestimmte Frequenzbänder übertragen werden, die dann ihrerseits wieder auf die die beiden Übertragungswege bildenden Kanäle in der soeben geschilderten Weise so verteilt werden, daß der eine Kanal für die vom anderen übertragenden Bänder jeweils gesperrt ist und umgekehrt.

Bei dem Arbeitsprinzip der bekannten Gegensprecheinrichtungen ist grundsätzlich zu beachten, daß die Gefahr der Selbsterregung durch elektrische und akustische Kopplungen zwischen den beiden Übertragungsrichtungen besteht, wobei allerdings die elektrische Kopplung durch entsprechend zweckmäßige Schaltungsanordnungen weitgehend unter Kontrolle gebracht werden kann, beispielsweise durch Verwendung einer Vierdrahtleitung, während bei Zweidrahtverbindungen in der Sprechkreisschaltung die Leitungsimpedanz durch einen veränderbaren komplexen Widerstand als Leitungsnachbildung approximiert wird.

Andererseits läßt sich die akustische Kopplung nicht so weitgehend eliminieren und es bedarf besonderer Maßnahmen, um diese Kopplung zu beherrschen. Sie entsteht dadurch, daß ein Kreis für einen Teil des vom Mikrofon der einen Sprechstelle aufgenommenen Schalls geschlossen wird, beispielsweise indem bei einer Gegensprechanlage mit getrennten Sprechkanälen das Schallsignal vom Mikrofon der einen Sprechstelle über Verstärker, Lautsprecher der Gegenstelle, Mikrofon der Gegenstelle, deren Verstärker zum Lautsprecher der Ausgangsstelle zurückgelangt, jeweils unter Umwandlung von Schalleistung in elektrische Leistung und umgekehrt, une schließlich das Mikrofon der Ausgangsstelle beeinflussen kann.

So gelingt es also grundsätzlich bei der Verwendung von zwei getrennten Übertragungswegen für die beiden Sender und Empfänger - (Vierdrahtverbindung) die elektrische Verkopplung von Sende-und Empfangssignal durch die Sprechkreisschaltung im Telefonapparat zu beseitigen (siehe elektrisches Rückhören DIN 44013, Bezugsdämpfungsmesser, Aufbau und Anwendung, Entwurfsvorlage April 1984).

Eine akustische Rückkopplung infolge der fehlabgeglichenen Brücke oder Störungen durch elektrisches Rückhören finden daher nicht mehr statt. Allerdings werden Halligkeit und Rückkopplungsfestigkeit bei Verwendung von Freisprecheinrichtungen mit dieser Anordnung nicht verbessert.

Es ist auch bekannt (DE-OS 2 813 432 und DE-OS 2 811 065) mittels einer sogenannten adaptiven Gabel theoretisch ähnlich wie bei Verwendung einer Vierdrahtleitung bei einer Zweidrahtverbindung Sende-und Empfangssignal annähernd zu entkoppeln. Dies geschieht durch den schon erwähnten veränderbaren komplexen Widerstand, der die Lei tungsimpedanz als Leitungsnachbildung approximiert. Aber auch hier wird nur eine Verbesserung der elektrischen Rückhördämpfung und die Vermeidung einer akustischen Rückkopplung bei fehlabgeglichener Brücke erreicht.

Bekannt ist in diesem Zusammenhang ferner, mit Hilfe einer Echokompensation die Raumübertragungsfunktion zu unterdrücken - (Aufsatz von Zelinsky "Eine Analyse des transienten Verhaltens des LMS-Algorithmus bei Filteranwendungen in der Raumakustik", 5. Aachener Kolloquium, Tagungsband Seite 239 bis 240; Aufsatz von Becker, Schultheiss und Hensler "Probleme bei der Kompensation akustischer Echos", Zeitschrift Frequenz 36 (1984), Seite 142 bis 148). Durch eine solche Echokompensation werden Lautsprechersignale und Raumechos, die durch Reflexionen des Schalls an den Wänden entstehen, unterdrückt. Hierzu wird das Lautsprechersignal mit der inversen Raumübertragungsfunktion gefiltert und anschließend vom Mikrofonsignal subtrahiert. Die Filterung erfolgt mittels Transversalfilter, dessen Koeffizienten anhand eines geeigneten Fehlermaßes eingestellt werden müssen. Die Einstellung muß adaptiv erfolgen, da sich die Raumübertragungsfunktion bei jeder Änderung im Raum (Bewegung des Sprechers) verändert. Weiterhin muß die Nachbildung der Feinstruktur der Raumübertragungsfunktion sehr genau sein, damit für alle Frequenzbereiche eine möglichst gute Echodämpfung erzielt werden kann. Dies erfordert Transversalfilter in einer Länge von 2000 bis 4000 Koeffizienten, die fortwährend neu eingestellt werden müssen. Es läßt sich ein Verstärkungsgewinn von 10 bis 30 dB erzielen. Probleme beim Abgleich des Transversalfilters ergeben sich insbesondere dann, wenn sich zusätzliche Störquellen im Raum befinden. Das gleiche Verfahren (Filterung mit der inversen Raumübertragungsfunktion) läßt sich bei der Nachhallbefreiung des Sprechermikrofons anwenden. Eine Realisierung eines derartigen Verfahrens in Realzeit ist bisher nicht möglich.

Sämtlichen bekannten Maßnahmen und Vorschlägen ist gemein im wesentlichen die unzureichende Kompatibilität zum bestehenden Fernsprechnetz, verbunden mit deutlich wahrnehmbaren, die Sprechverständlichkeit reduzierenden Klangverfärbungen.

Hier ergeben sich insbesondere dann noch Probleme, wenn bei einer bestehenden Gegensprechverbindung mindestens eine sogenannte Freisprecheinrichtung betreiligt ist, bei der also das von einem Teilnehmer empfangene Signal des anderen Teilnehmers über einen Lautsprecher frei in den Raum abstrahlt und dieser Teilnehmer auch seine eigenen Nachrichten in entsprechende Entfernung zu einem Mikrofon akustisch erzeugt, beispielsweise indem er sich in dem Raum herumbewegt. In diesem Fall entsteht allein schon aufgrund von Raumreflexionen, die vom Mikrofon der Freisprecheinrichtung erfaßt werden, ein unangenehmer, halliger Eindruck bei der Gegensprechstelle.

Besteht eine solche Gegensprechverbindung sogar aus zwei Fernsprecheinrichtungen, dann kann die Schleifenverstärkung für einzelne Frequenzen je nach eingestellter Lautstärke $V_S > 1$ werden, was bekanntlich zu dem sogenannten Rückkopplungspfeifen führt.

Im folgenden werden noch einige der bei der Erläuterung der Erfindung häufig verwendeten Begriffe definiert. So versteht man unter der Rückhördämpfung die Dämpfung, die sich bestimmen läßt, wenn man bei der Übertragung vom Mikrofon zum Hörer desselben Meßobjekts, beispielsweise eines Fern sprechapparats mit bestimmter Abschlußimpedanz, den entstehenden Schalldruck am Hörer auf den (sendenden) Schalldruck am Mikrofon bezieht.

Eine Gegensprecheinrichtung ermöglicht die akustische Verbindung von mindestens zwei Teilnehmern unter Verwendung von elektroakustischen Wandlern, wobei ein Sprechen in beiden Richtungen gleichzeitig möglich ist. Als Schallaufnehmer werden in der Regel Mikrofone verwendet, als Schallgeber sind Ohrhörer oder Lautsprecher denkbar, wobei die gebräuchlichste Form einer Gegensprecheinrichtung der Fernsprecher ist.

Die genannte Rückhördämpfung läßt sich aufteilen in eine elektrische Rückhördämpfung, die beispielsweise bei einem Fernsprechapparat begrenzt wird durch die nur grobe Approximation der komplexen Leitungsimpedanz in der Brückenschaltung (Gabelschaltung) der Fernsprecheinrichtung, was in der Regel eine fehlabgeglichene Brücke bewirkt, wodurch die vom Mikrofon aufgenommenen Schallsignale im Hörer desselben Fernsprechers unmittelbar widergegeben werden, und die akustische Rückhördämpfung.

Diese weiter vorn schon genauer definierte akustische Rückhördämpfung wird begrenzt von der Aufnahme des vom Widergabewandler abgestrahlten Schalls durch das Mikrofon. Besteht die Fernsprecheinrichtung anstelle des üblichen Handapparats aus einer Freisprecheinrichtung, erfolgt also die Widergabe über einen Lautsprecher, dann reduziert sich die Rückhördämpfung durch die Beschallung des Mikrofons des einen Teilnehmers mit den vom anderen Teilnehmer über Lautsprecher widergegebenen Schallsignale, wird also geringer, was einem verstärkten Rückhören, gegebenenfalls begleitet durch Rückkopplungspfeifen u.dgl. entspricht.

Der Erfindung liegt die Aufgabe zugrunde, bei einer Gegensprecheinrichtung der eingangs als Gattung genannten Art Aufbau und speziell Anordnung und Ausbildung der Filter so zu gestalten, daß sich die Sprachverständlichkeit im entscheidenden Maße erhöht, insbesondere also Klangverfärbungen durch die verwendeten speziellen Filterstrukturen vernachlässigbar sind und insbesondere in störschallerfüllter Umgebung eine signifikant verbesserte Sprachverständlichkeit, unabhängig davon, ob mit normalen Handapparaten oder Freisprecheinrichtungen etwa bei Fernsprechern gearbeitet wird, erzielt werden kann.

Vorteile der Erfindung

Die Erfindung löst diese Aufgabe mit den kennzeichnenden Merkmalen des Hauptanspruchs und hat den Vorteil, daß die durch die Erfindung gewährleistete Verbesserung der Rückhördämpfung und gleichzeitige Erhöhung der möglichen Schleifenverstärkung auch in störschallerfüllter Umgebung und insbesondere bei Freisprecheinrichtungen, selbst wenn diese an beiden Enden des Übertragungsweges vorhanden sind, eine Sprachverständlichkeit erzielt werden kann, die sich in entscheidendem Maße von den bisher bekannten System unterscheidet; dabei ist es möglich, auch in bestehende Fernsprechverbindungen das erfindungsgemäße Filter zu integrieren, ohne daß sich hierdurch Kompatibilitätsprobleme ergeben.

Die Erfindung ermöglicht eine Erhöhung der Schleifenverstärkung in sinnvoller Weise, ohne daß hierdurch gleichzeitig auch die Mikrofonsignale derselben Teilnehmereinrichtung verstärkt werden.

Auch bei völlig fehlabgeglichener Brückenschaltung, wie dies beispielsweise bei einer Nebenstellenanlage auftreten kann, beim Trennen des Handapparats von der Amtsleitung, ist durch den Einsatz der Erfindung die Rückhördämpfung so hinreichend groß, daß keine akustische Rückkopplung entstehen kann.

Der Erfindung gelingt auch die Beseitigung des nachteiligen, halligen Eindrucks, der bei einer Gegenstelle entsteht, wenn auf der anderen Seite mit einem Fernsprechteilnehmer gesprochen wird, der sich einer Freisprecheinrichtung bedient.

Schließlich gelingt es durch den Einsatz vorliegender Erfindung, das unangenehme Rückkopplungspfeifen auch dann zu unterdrücken, wenn die Schleifenverstärkung für einzelne Frequenzen, je nach der eingestellten Lautstärke, größer als $V_S > 1$ werden sollte.

Die Erfindung benützt dabei als Ausgangspunkt zur Vergrößerung der akustischen oder elektrischen Rückhördämpfung bei einer Gegensprecheinrichtung die Erkenntnis und beruht auch auf dieser, daß das menschliche Gehör einfallende Schallsignale in einer speziellen Art und Weise einer Leistungsdichteanalyse unterwirft. Die vom Außenohr über das Mittelohr ins Innenohr transformierten akustischen Signale bilden auf der Basilarmembran vergleichbar zu einer Terzanalyse bestimmte Filtermuster aus, so daß ungefähr in Terzabstände für die jeweiligen Terzmittenfrequenzen einzelne Lautheitseindrücke ermittelt werden, was für sich gesehen bekannt ist und beschrieben worden ist in dem Buch "Psychoakustik" von E. Zwicker, Springer-Verlag 1982.

Ist nun durch ein Schallsignal die Basilarmembran in einer speziellen Weise angeregt, so ist das Gehör nicht mehr in der Lage, je nach Pegel einen einzelnen Ton, dessen Frequanz dicht benachbart zu einer Terzmittenfrequenz liegt, wahrzunehmen. Dieser Effekt wird in der Psychoakustik als sogenannte Verdeckung bezeichnet und ist für sich gesehen ebenfalls schon erkannt und beschrieben worden in dem Buch "Das Ohr als Nachrichtenempfänger" von E. Zwicker und R. Feldtkeller, Hirzel-Verlag Stuttgart 1967.

Diese beiden besonderen psychoakustischen Eigenschaften des Gehörs ermöglichen die Aufteilung der beiden Sprechwege einer Gegensprecheinrichtung in die durch die Erfindung speziell ausgebildeten, unterschiedlichen Frequenzbänder, wobei die Signale durch Bandsperren der Breite entsprechend kleiner 1/2 Terz gefiltert werden, wobei diese Bandsperren ferner in nicht harmonischen Abständen angeordnet sind und wobei - schließlich das Dämpfungsmaß der Sperrbereiche mit zunehmender Frequenz vergrößert wird. Auf diese Weise läßt sich einerseits gerade bei höheren Frequenzen ein Rückkopplungspfeifen verhindern und andererseits sicherstellen, daß die Klangfarbe im Stimmgrundfrequenzbereich des Menschen nicht wahrnehmbar beeinträchtigt wird.

Durch die in den Unteransprüchen aufgeführten Maßnahmen sind vorteilhafte Weiterbildungen und Verbesserungen der im Hauptanspruch angegebenen Einrichtung möglich. So erhöht sich die Sprachverständlichkeit weiter, wenn die jeweiligen Spektralanteile, die in einem Sperrbereich liegen, durch eine Frequenzverschiebung in den oder die nächsten benachbarten Durchlaßbereiche verschoben und den dort durchgelassenen Spektralanteilen hinzuaddiert werden. Dabei weisen die Durchlaß-und Sperrbereiche der Bandpässe, die als Filtermittel bei der Erfindung eingesetzt werden, weder im linearen noch im logarithmischen Frequenzmaßstab konstante Abstände auf - (nichtharmonische Abstände).

Zeichnung

Ausführungsbeispiele der Erfindung sind in der Zeichnung dargestellt und werden in der nachfolgenden Beschreibung näher erläutert. Es zeigen:

Fig. 1 in Form eines Blockschaltbildes eine Sende-und Empfangseinrichtung für Duplexbetrieb;

Fig. 2 ebenfalls in Form eines der Darstellung der Fig. 1 vergleichbaren Blockschaltbilds den Aufbau einer herkömmlichen Fernsprecheinrichtung;

Fig. 3 in Form eines Diagramms der Dämpfung über der Frequenz eine bevorzugte Ausführungsform des bei den jeweiligen Teilnehmern der Gegensprecheinrichtung eingesetzten Übertragungsfilter in der zueinander versetzten Lage der Sperr-und Durchlaßbereiche;

Fig. 4 zeigt den möglichen Schaltungsaufbau eines Filters für bestehende analoge Netze und

Fig. 5 zeigt den Gesamtaufbau einer Filterausführungsform mit Mitteln, die die Signalanteile im Spektralbereich eines Sperrbereichs in davor oder dahinter liegende Frequenzbereiche verschieben.

Beschreibung der Ausführungsbeispiele

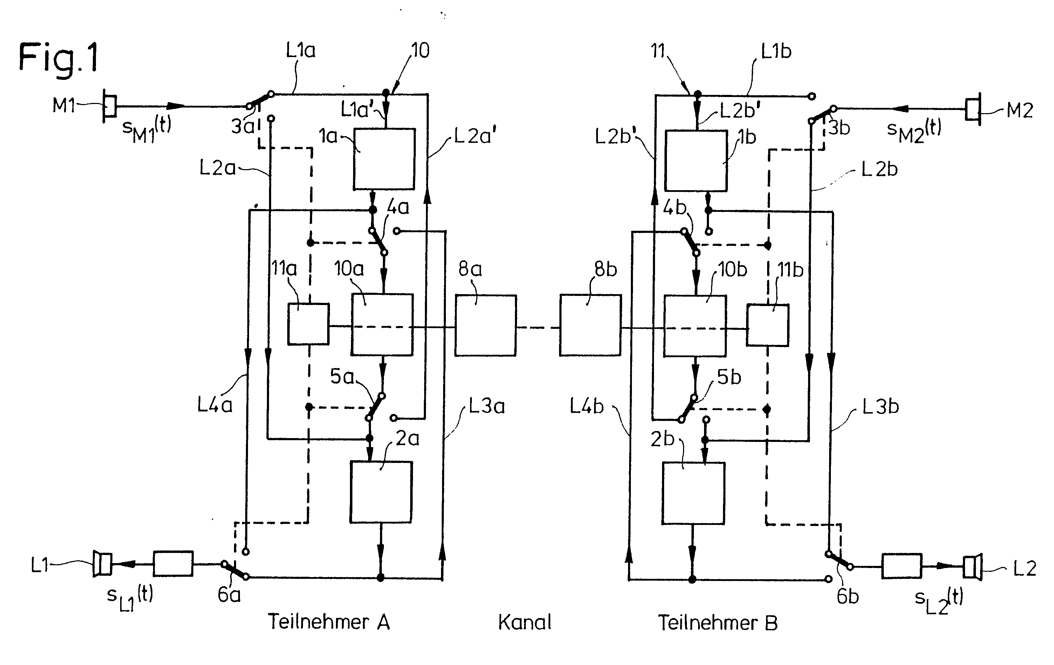

In Fig. 1 ist die Sprechstelle des Teilnehmers A mit 10, die Sprechstelle des Teilnehmers B mit 11 bezeichnet; zwischen den beiden Sprechstellen befindet sich der Über tragungsweg, gebildet von den jeweils endseitigen Kanal-Coder/Decoder-Einrichtungen 8a, 8b und der eigentliche Übertragungs-oder Sendestrecke (drahtlos oder durch entsprechende Drahtverbindungen).

Auf jeder Seite der Gegensprechverbindung, die bei dem dargestellten Ausführungsbeispiel eine Fernsprecheinrichtung oder Freisprecheinrichtung sein kann, befinden sich die gleichen Schaltungskomponenten, so daß lediglich auf den Aufbau der Einrichtung 10 genauer eingegangen wird. Es ist ein die von dem Teilnehmer stammenden Schallsignale elektrische Ausgangssinale $S_{M1}$ (t) umwandelndes Mikrofon M1 vorgesehen, dessen Signale zu einer ersten Umschalteinrichtung, nämlich einen Schalter 3a gelangen. Der Lautsprecher oder Hörer ist mit L1 bezeichnet und empfängt das Signal $S_{L1}$ (t) Über verschiedene Leitungsverbindungen, auf die weiter unten noch eingegangen wird, sind mit Lautsprecher und Mikrofon verschaltet ein erstes Filter 1a und ein zeites Filter 2a, die jeweils unterschiedliche Durchlaß-und Sperrbereiche aufweisen, wie weiter unten noch erläutert wird. Es ist ferner eine zentrale Sende-Empfangsschaltung 10a vorgesehen, die unmittelbar mit dem jeweiligen direkt ausgangs-oder eingangsseitig angeordneten Kanal-Coder/Decoder 8a in Verbindung steht und einen weiteren Decoder 11a ansteuert, der gemeinsam und gleichzeitig sämtliche vier zu der jeweiligen Sprechstelle gehörende Schalter 3a, 4a, 5a und 6a dann in die jeweils andere Position umschaltet.

Die Sprechstelle für den Teilnehmer B ist identisch aufgebaut und die Bezugszeichen für die Schaltungskomponenten dieser Sprechstelle 11 sind jeweils durch den anderen Index "b" gekennzeichnet.

Die Schaltungskomponenten 1a, 2a, 8a, 10a, 11a sind über verschiedene Leitungsverbindungen miteinander verbunden, die erforderlich sind, um in Verbindung mit den Umschaltern 3a, 4a, 5a und 6a sicherzustellen, daß die Sprechwege durch vorgegebene Übertragungsfunktionen gewichtet werden, während die akustische und elektrische Rückhördämpfung durch hierzu unterschiedliche Übertragungsfunktion beschrieben werden kann.

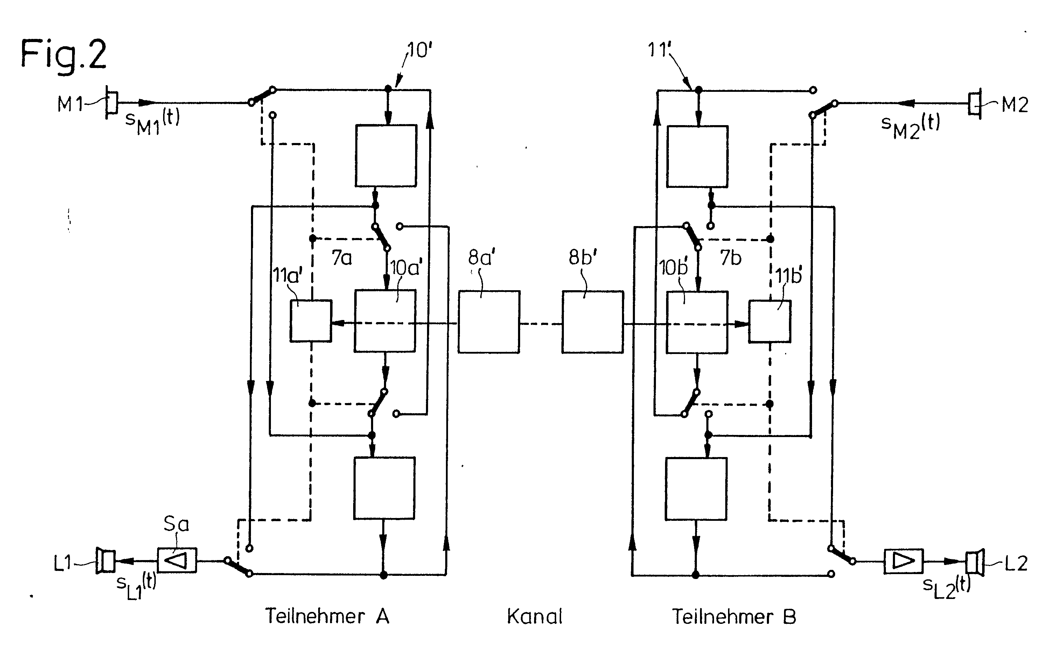

Da bei dem Ausführungsbeispiel der Fig. 2, welches als Blockschaltbild eine herkömmliche Fernsprecheinrichtung beschreibt, lediglich der Sender/Empfängerblock 10a als bekannte Gabelschaltung 10a', 11b' ausgebildet ist, ist die nachfolgende Funktionsbeschreibung für beide Ausführungsformen gültig.

Die Position der Schalter in der in der Fig. 1 und 2 gezeigten Position stellt sicher, daß für Sprechwege einerseits und der akustischen und elektrischen Rückhördämpfung andererseits unterschiedliche Übertragungsfunktionen ergeben.

Da wie erwähnt die Schalterstellung von den Decodern 11a, 11b bestimmt wird, sind diese so ausgebildet, daß sie, abhängig davon, ob der jeweilige Teilnehmer ruft oder angerufen wird, was für die Decoder problemlos zu unterscheiden ist, eine bestimmte Schalterstellung vorgeben, die dann für diese beiden Fälle jeweils unterschiedlich ist, so daß sich hierdurch notwendigerweise für den einen Teilnehmer A, der hier angenommenerweise der rufende Teilnehmmer ist, eine andere Schalterstellung als für den Teilnehmer B ergibt.

In dem angenommenen Fall und bei den jetzt vorausgesetzten Schalterstellungen läuft daher das Mikrofonsignal des Teilnehmers A über die Leitung L1a und die Zweigleitung L1a' zum Filter 1a mit einer vorgegebenen Filtercharakteristik - (Übertragungsfunktion) auf die weiter unten noch eingegangen wird, und von diesem über die in der Figur gezeigte Schalterposition des Umschalters 4a zum Sender/Empfänger 10a, gelangt über Kanal-Coder/Decoder 8a, 8b zum Sender/Empfänger 10b des Teilnehmers B und von der Empfängerseite über die Verbindungsleitung L2b mit Zweigleitung L2b' zum Filter 1b, welches die gleichen Filtereigenschaften und daher Übertragungsfunktionen aufweist wie das Filter 1a - (beide sind als Filter X bezeichnet). Vom Filter 1b gelangt dann das Signal über die Leitung L3b zum Lautsprecher oder Hörer L2 des anderen Teilnehmers B.

Demgegenüber läuft ein vom Mikrofon M2 des anderen Teilnehmers B in diesem Zusammenhang aufgefangenes, also vom Lautsprecher oder Hörer L2 widergegebenes Schallsignal bei dieser Stellung des Umschalters 3b über das Filter 2b (Filter mit der Übertragungsfunktion oder Filtercharakteristik Y); von diesem über die Leitung L4b zum Sendebereich des Sender/Empfängerblocks 10b, über den Übertragungsweg zum Empfänger Sender/Empfängerblocks 10a, von diesem bei der Schalterstellung des Umschalters 5a über das Filter 2a (Übertragungsfunktion Y) und von diesem zum Hörer oder Lautsprecher L1. Man erkennt, daß die Übertragungsfunktionen für die Sprechwege einerseits und die akustische und elektrische Rückhördämpfung andererseits unterschiedlich sind.

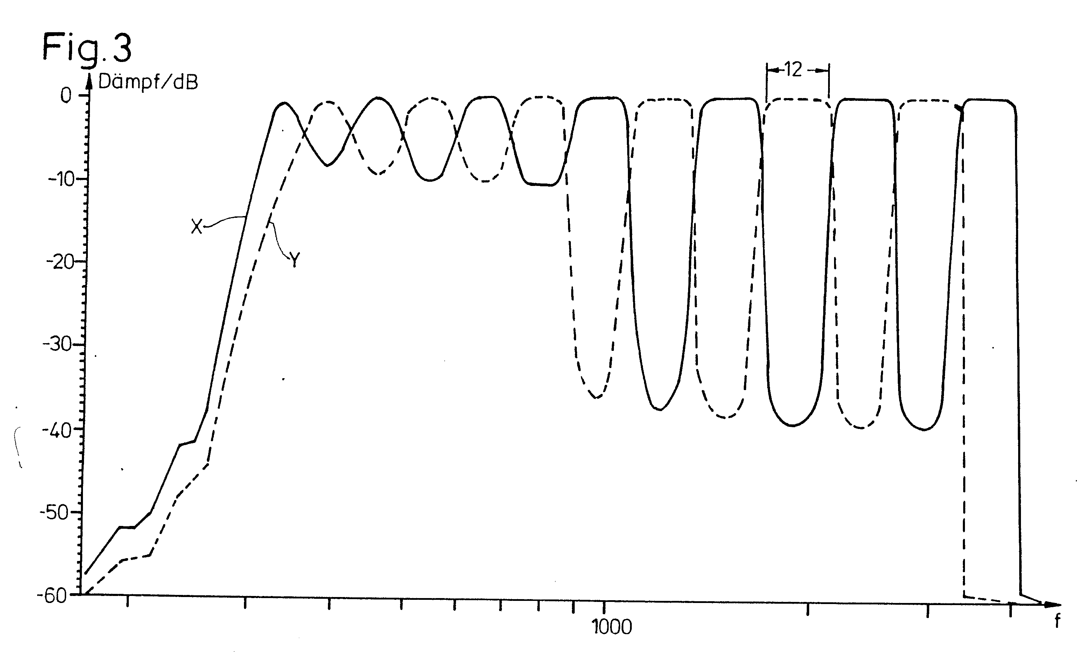

Die Beträge der Übertragungsfunktionen $H_1(f)$ des Filters X sowie $H_2(f)$ des Filters Y sind bei X und Y in Fig. 3 dargestellt, wobei die Frequenz im logarithmischen Maßstab aufgetragen ist.

Wie soeben erläutert und den Darstellungen der Fig. 1 und 2 entnehmbar, befinden sich in jeder Gegensprecheinrichtung zwei Filter 1a, 2a bzw. 1b, 2b, also jeweils ein Filter X und ein Filter Y mit insofern unterschiedlichen Übertragungsfunktionen $H_1(f)$ und $H_2(f)$, wobei die Filterkurvenverläufe genau entgegengesetzt sind, d.h. die Durchlaßbereiche des einen Filters X entsprechen den Sperrbereichen des anderen Filters Y und umgekehrt. Die beiden Filter werden je nach Bedarf in den Signalzweig für den Hörer bzw. Lautsprecher oder für das Mikrofon geschaltet.

Bei dem Ausführungsbeispiel der Fig. 2 kann die Steuerung der Filterzuordnung über die Schalter beispielsweise bei einem Fernsprecher durch Auswertung des Ruftons erfolgen, der über die Gabelschaltung 10a', 10b' zum jeweils zugeordneten Decoder 11a', 11b' gelangt, d.h. der rufende Teilnehmer (in der Zeichnung der Teilnehmer A) besitzt dann im Signalzweig des Mikrofons das Filter X mit der Übertragungsfunktion $H_1(f)$ und im Signalzweig des Hörers oder Lautsprechers des Filter Y mit der Übertragungsfunktion $H_2(f)$. Beim gerufenen Teilnehmer erfolgt die Zuordnung genau vertauscht, so daß die Sprechwege durch die Übertragungsfunktion $H_s(f)$

$$H_{s1}(f) = H_1(f) . H_1(f)$$
$$H_{s2}(f) = H_2(f) . H_2(f)$$

gewichtet werden, während die akustische und elektrische Rückhördämpfung durch die Übertragungsfunktionen $H_{ar}(f)$ und $H_{er}(f)$ entsprechend:

$$H_{ar}(f) = A(f) . H_1(f) . H_2(f)$$
$$H_{er}(f) = B(f) . H_1(f) . H_2(f)$$

gewichtet werden, wobei $A(f)$ und $B(f)$ die jeweils relevanten akustischen und elektrischen Rückhöfdämpfungen ohne Filterung beschreiben.

Zur Realisierung der Filterübertragungsfunktionen $H_1(f)$ und $H_2(f)$ bei einer digitalen Fernsprechverbindung, wie in Fig. 1 als Beispiel dargestellt, kann so vorgegangen werden, daß von den abgetasteten Signalen mit Hilfe der Fast-Fourier-Transformation die Kurzzeitspektren gebildet werden. Die entsprechenden Frequenzkoeffizienten werden vor der Rücktransformation zu Null gesetzt, so daß sich neben der gewünschten Filterwirkung auch noch eine zusätzliche, wünschenswerte Datenreduktion ergibt.

Aus dem Verlauf der Filterkurven, also der Übertragungsfunktionen von $H_1(f)$ und $H_2(f)$ der beiden Filter X und Y (Fig. 3) erkennt man, daß, basierend auf den besonderen psychoakustischen Eigenschaften des Gehörs, die beiden Sprechwege einer Gegensprecheinrichtung in zwei unterschiedliche Frequenzbänder aufgeteilt sind, wobei die Signale durch Bandsperren mit einer Breite 12 gefiltert werden, die kleiner als 1/2 Terz ist, wobei die Bandsperre in nicht harmonischen Abständen liegen und ferner das Dämpfungsmaß der Sperrbereiche mit zunehmender Frequenz vergrößert wird, wie der zum Teil erhebliche Dämpfungsanstieg bei Frequenzen über 1.000 Hz erkennen läßt.

Es wird ausdrücklich darauf hingewiesen, daß die jeweiligen Durchlaß-und Sperrbereiche der Bandpässe, aus denen die Filter X und Y bestehen, weder im linearen noch im logarithmischen Frequenzmaßstab konstante Abstände aufweisen und die zusammengesetzten Filterkurvenverläufe in Fig. 3 daher auch nicht quantitativ zu verstehen sind, sondern lediglich qualitativ ein mögliches Ausführungsbeispiel jeweils einer Übertragungsfunktion angeben.

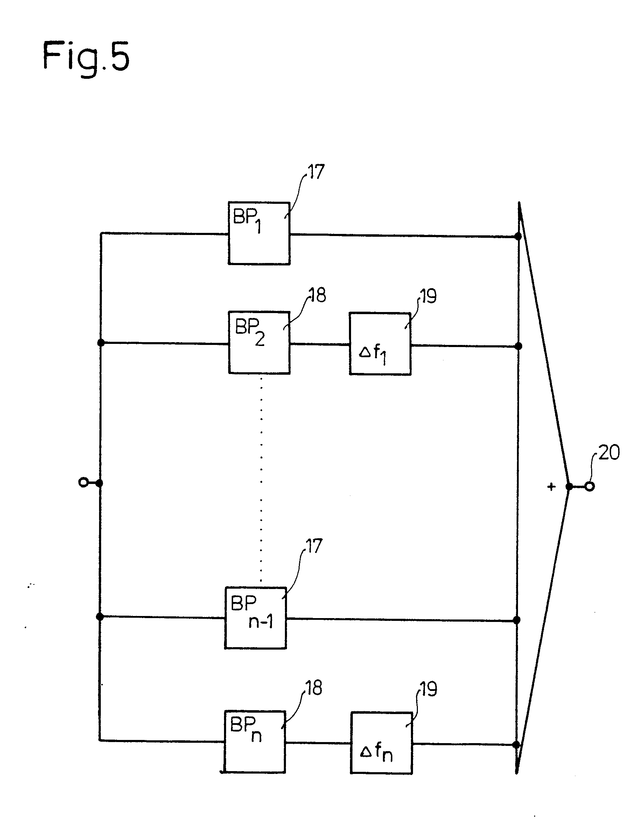

Der Grundaufbau eines solchen Filters kann dann so aussehen, wie in Fig. 5 gezeigt; es sind eine Vielzahl von Bandpaßfiltern BP1, BP2, ... BPn-1, BPn, die in Fig. 5 mit den Bezugszeichen 17 bzw. 18 versehen sind, vorgesehen, deren Ausgänge, ohne hier zunächst auf die Blöcke 19 einzugehen, an einer Summationseinheit 20 zusammengefaßt sind.

Durch eine entsprechende Auslegung der Bandpaßfilter mit Vergrößerung des Dämpfungsmaßes der Sperrbereiche mit zunehmender Frequenz wird das bei höheren Frequenzen gegebenenfalls auftretende Rückkopplungspfeifen verhindert, andererseits bleibt aber die Klangfarbe im Stimmengrundfrequenzbereich des Menschen praktisch unbeeinträchtigt.

Um ferner zu verhindern, daß gerade die Spektralkomponenten von tonalen Anteilen weggefiltert werden, kann ein solches Filter, wie Fig. 5 zeigt, so ausgelegt werden, daß die Filterung durch ein Filter mit statistischer und damit zufälliger Reihenfolge von Durchlaßbereichen (Filter 17 in Fig. 5) und Sperrbereichen (Filter 18 mit den nachgeschalteten Blöcken 19) erfolgt. Dabei können zusätzlich die Signalanteile, die im Spektralbereich eines Sperrbereichs liegen (Bandpaßfilter 18), in die auf der Frequenzachse davor und dahinter liegenden Frequenzbereichen verschoben werden, und zwar mittels für sich gesehen bekannten Frequenzverschiebeeinheiten 19, die dann den Bandpaßfiltern 18 nachgeschaltet sind. Mit anderen Worten, man benötigt in diesem Analogtechnikbereich keine Bandsperren, sondern die von den Bandpaßfiltern 18 durchgelassenen Spektralanteile werden lediglich in davor oder dahinter liegende Durchlaßbereiche verschoben.

Bei diesem Verfahren der Filterung mit Bandpaßfiltern 17, 18 und Frequenzverschiebeeinheiten 19 können die Bandpaßfilter 17, 18 eine Breite entsprechend 1/8 Terz aufweisen und in 1/8 Terzabständen folgen. Die für die weitere Übertragung durch das Filter zu sperrende Frequenzbereiche gelangen durch die Wirkung der Frequenzverschiebeeinheiten 19 in die Durchlaßbereiche des Filters und werden bei 20 den durchgelassenen Signalanteilen hinzuaddiert.

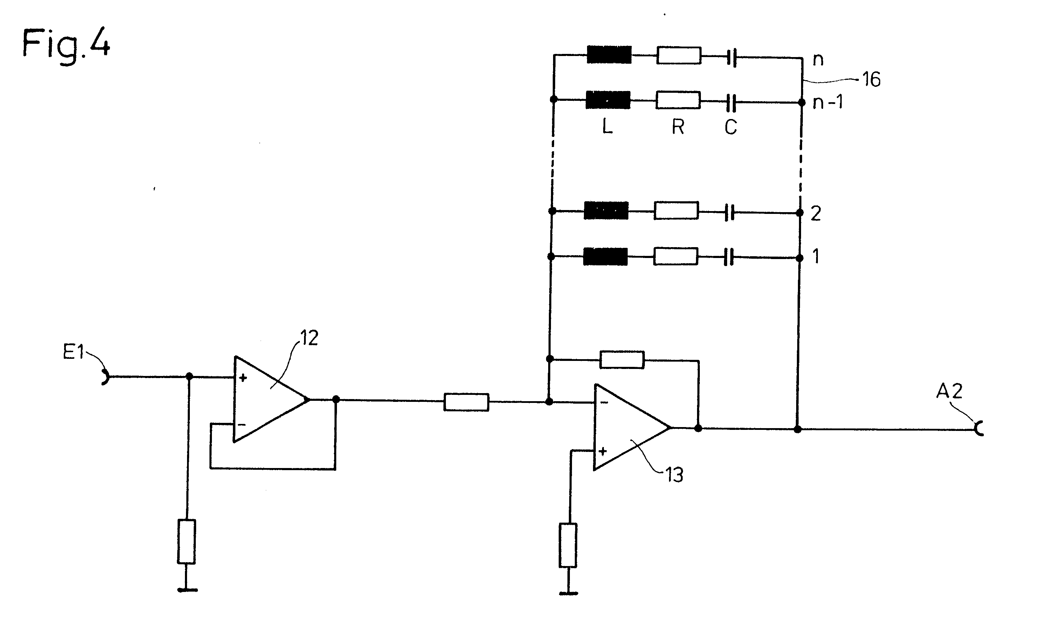

Für bestehende analoge Netze empfiehlt sich eine beispielsweise approximative Realisation des Filters mit einer Entzerrerschaltung, wie sie in Fig. 4 dargestellt ist, in welcher in einem hier maßgeblichen Frequenzbereich von beispielsweise etwa 300 Hz bis etwa 4 KHz zwölf Absenker in der Form einer auf einer Spule L, einem Widerstand R und einem Kondensator C gebildeten Serienschaltung jeweils parallel zusammengeschaltet werden. Die Serienschaltungen können beispielsweise eine Güte von 20 und eine Dämpfung von 20 dB aufweisen.

In Fig. 4 sind zwei hintereinandergeschaltete Operationsverstärker 12 und 13 vorgesehen, wobei sich die Absenker 16 im Rückkopplungszweig des zweiten Operationsverstärkers befinden; eine solche Entzerrerschaltung ist von herkömmlichem Aufbau und braucht nicht weiter erlautet zu werden.

Untersuchungen an Hörtests haben ergeben, daß durch die Erfindung Klangverfärbungen praktisch nicht auftreten und der Gewinn an Sprachverständlichkeit auch in störschallerfüllter Umgebung signifikant positiv ausfällt. Durch den problemlosen Einbau der Filter in bestehende Fernsprech verbindungen läßt sich daher eine entscheidende Verbesserung ohne das Entstehen von Kompatibilitätsproblemen erzielen.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Einrichtung zur Verbesserung der Rückhördämpfung bzw. der Schleifenverstärkung bei Gegensprecheinrichtungen, mit mindestens jeweils einem zueinander inverse Übertragungsfunktionen bildenden Filter in jeder Sprechstelle von allgemein kammfilterähnlicher Struktur und gegeneinander versetzten Durchlaß- und Sperrbereichen, dadurch gekennzeichnet, daß die Durchlaß-und Sperrbereiche der zueinander inversen Filter in einem nichtharmonischen Verhältnis stehen und mit zunehmender Frequenz eine wachsende Sperrdämpfung aufweisen, derart, daß lediglich die für die Klangbildung und Sprachverständlichkeit relevanten Energieanteile in den jeweiligen Frequenzgruppen entsprechend dem menschlichen Gehör übertragen, die aufgrund der Vor-, Nach-und Simultanverdeckung nicht zur Sprachverständlichkeit beitragenden Energieanteile des Spektrums vernachlässigt sind.

2. Einrichtung nach Anspruch 1, dadurch gekennzeichnet, daß die jeweiligen Durchlaß-und Sperrbereiche der Filter (1a, 1b; 2a, 2b) kleiner als ca. 1/2 Terz sind und bezogen sowohl auf einen linearen als auch logarith mischen Frequenzmaßstab inkonstante Abstände (12) aufweisen.

3. Einrichtung nach Anspruch 1 oder 2, dadurch gekennzeichnet, daß gleichzeitig mit den Maßnahmen nach Anspruch 1 oder 2 die Verstärkung des senderseitigen Signals und/oder der an die Hörkapsel angelegten Signale zur Verbesserung des Signal-Störabstandes und zur Unterdrückung von Rückkopplungseffekten und der Raumhalligkeit beim Freisprechen angehoben wird.

4. Einrichtung nach einem der Ansprüche 1 bis 3, dadurch gekennzeichnet, daß die jeweiligen Spektralanteile, die jeweils in einem Sperrbereich der Filter (1a, 1b; 2a, 2b) liegen, durch eine Frequenzverschiebung in die nächsten benachbarten Durchlaßbereiche verschoben und den durchgelassenen hinzuaddiert sind.

5. Einrichtung nach einem der Ansprüche 1 bis 4, dadurch gekennzeichnet, daß durch Anordnung von jeweils zwei Filtern (1a, 2a; 1b, 2b) mit jeweils inversen Übertragungsfunktionen ($H_1(f)$; $H_2(f)$) die so angeordnet sind, daß beim rufenden Teilnehmer im Signalzweig des Mikrofons ein Filter (X) mit einer ersten Übertragungsfunktion ($H_1(f)$) und im Signalzweig des Hörers oder Lautsprechers (L1) ein Filter (Y) mit der zweiten Übertragungsfunktion ($H_2(f)$) mit beim gerufenen Teilnehmer vertauschter Zuordnung angeordnet sind, die jeweiligen Sprechwege definiert sind durch die Übertragungsfunktionen

$H_{s1}(f) = H_1(f) \cdot H_1(f)$

$H_{s2}(f) = H_2(f) \cdot H_2(f)$

definiert sind, mit Gewichtung der akustischen und elektrischen Rückhördämpfung durch die Übertragungsfunktionen

$$H_{ar}(f) = A(f) \cdot H_1(f) \cdot H_2(f)$$
$$H_{er}(f) = B(f) \cdot H_1(f) \cdot H_2(f)$$

6. Einrichtung nach einem der Ansprüche 1 bis 5, dadurch gekennzeichnet, daß jede Sprechstelle einen Decoder (11a, 11b) aufweist, der feststellt, ob es sich um einen rufenden oder einen gerufenen Teilnehmer handelt und durch entsprechende Zuschaltungen die Filter (1a, 1b; 2a, 2b) in die jeweiligen Übertragungswege von den Mikrofonen (M1; M2) zu den Hörern oder Lautsprechern (L1, L2) des jeweils anderen Teilnehmers einschaltet.

7. Einrichtung nach Anspruch 6, dadurch gekennzeichnet, daß die Decoder (11a, 11b) Schalter (3a, 4a, 5a, 6a; 3b, 4b, 5b, 6b) betätigen, die so ausgebildet sind, daß sie in die jeweiligen Signalübertragungswege vom Mikrofon (M1) des einen Teilnehmers zum Lautsprecher (L2) des anderen Teilnehmers bzw. vom Mikrofon (M2) des anderen Teilnehmers zum Lautsprecher (L1) des einen Teilnehmers Filter gleicher Art (X bzw. Y) in Reihe - schalten derart, daß sich sowohl die Rückhördämpfung zwischen Mikrofon und Hörer bzw. Lautsprecher jedes Teilnehmers als auch die Gesamtschleifendämpfung durch das sich in diesem Fall ergebende Zusammentreffen von Filtern unterschiedlicher Art (X mit Y) vergrößert.

8. Einrichtung nach Anspruch 6 oder 7, dadurch gekennzeichnet, daß in Fernsprechnetzen die Steuerung des Decoders (11a', 11b') durch den Rufton und Zuführung über die Gabelschaltung - (10a', 10b') erfolgt.

9. Einrichtung nach einem der Ansprüche 1 bis 8, dadurch gekennzeichnet, daß die durch die Unterdrückung der für die Sprachverständlichkeit irrelevanten Energieanteile zur Verfügung stehende Übertragungskanalkapazität durch jeweils ausgangsseitig jeder Sprechstelle angeordneter Kanal-Coder/Decoder (8a, 8b; 8a', 8b') für eine Vergrößerung der Bandbreite, Dynamik und Übertragungssicherheit ausgenutzt ist.

10. Einrichtung nach einem der Ansprüche 1 bis 8, dadurch gekennzeichnet, daß jedes Filter aus einer vorgegebenen Anzahl von Bandpässen (BP1, BP2 ... BPn-1, BPn) besteht und daß bestimmten der Bandpässe (18) Frequenzverschiebeeinheiten - (19) nachgeschaltet sind, die hierdurch für die weitere Übertragung durch das Filter gesperrte Frequenzbereiche in die Durchlaßbereiche benachbarter Bandpässe verschieben und so den durchgelassenen Signalanteilen hinzuaddieren.

11. Einrichtung nach Anspruch 10, dadurch gekennzeichnet, daß die Ausgänge sämtlicher Bandpässe (17) und sämtlicher bestimmten Bandpässen (18) nachgeschalteter Frequenzverschiebeeinheiten (19) einer gemeinsamen Summiereinheit (20) zugeführt sind.

12. Einrichtung nach Anspruch 10 oder 11, dadurch gekennzeichnet, daß die Filter (1a, 1b; 2a, 2b) eine statistische (zufällige) Reihenfolge von Durchlaßbereichen (17) und Sperrbereichen - (18/19) aufweisen.

13. Einrichtung nach einem der Ansprüche 10 bis 12, dadurch gekennzeichnet, daß die Bandpaßfilter (17, 18) eine Breite jeweils entsprechend 1/8 Terz aufweisen und in 1/8 Terzabständen angeordnet sind.

14. Einrichtung nach einem oder mehreren der Ansprüche 1 bis 13, dadurch gekennzeichnet, daß zur Realisierung jeweils eines Filters Absenker aus der Reihenschaltung jeweils einer Spule (L), eines Widerstands (R) und eines Kondensators (C) zueinander parallelgeschaltet und im Rückkopplungszweig eines Verstärkers (13) angeordnet sind.

15. Einrichtung nach einem der Ansprüche 1 bis 14, dadurch gekennzeichnet, daß die Filterung durch Filter (X, Y) mit statistischer und damit zufälliger Reihenfolge von Durchlaßbereichen und Sperrbereichen erfolgt.

16. Einrichtung nach einem der Ansprüche 1 bis 15, dadurch gekennzeichnet, daß zur Filterung bei digitalen Fernsprechverbindungen von den abgetasteten Signalen mittels der Fast-Fourier-Transformation die Kurzzeitspektren gebildet und die jeweils entsprechenden (zu sperrenden Frequenzbändern entsprechenden) Frequenzkoeffizienten zu Null gesetzt werden.

# Fig.1

M1

$s_{M1}(t)$

L1a

10

3a

L1a'

1a

L2a'

L2a

L2a

11a

10a

8a

4a

5a

2a

L3a

L4a

L1

$s_{L1}(t)$

6a

Teilnehmer A

Kanal

11

L1b

L2b'

L2b'

1b

L2b

4b

8b

10b

11b

L4b

5b

2b

L3b

3b

$s_{M2}(t)$

M2

6b

$s_{L2}(t)$

L2

Teilnehmer B

0 235 765

Fig.2

M1

$s_{M1}(t)$

10'

11a'          7a          10a'          8a'          8b'          10b'          7b          11b'

11'

$s_{M2}(t)$          M2

Sa

L1

$s_{L1}(t)$          $s_{L2}(t)$          L2

Teilnehmer A          Kanal          Teilnehmer B

0 235 765

Fig.3

0 235 765

# Fig.4

0 235 765

# Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | BE-A- 505 114 (R. CARADEAU et al.)<br>* Seite 3, Zeile 36 - Seite 4, Zeile 30 * | 1-3 | H 04 M 9/08<br>H 04 B 3/21 |
| A | US-A-3 622 714 (D.A. BERKLEY et al.)<br>* Spalte 2, Zeilen 11-37; Spalte 3, Zeilen 28-55 * | 1-2 | |
| A | US-A-3 175 051 (C.C. CUTLER)<br>* Spalte 4, Zeilen 14-35 * | 1-2 | |
| A | EP-A-0 155 740 (N.V. PHILIPS' GLOEILAMPENFABRIEKEN)<br>* Seite 3, Zeilen 23-29; Seite 6, Zeilen 2-16; Seite 8, Zeilen 1-17; Figur 1 * | 1-2,5-8 | RECHERCHIERTE SACHGEBIETE (Int. Cl.4)<br><br>H 04 M<br>H 04 B<br>H 04 R |

Der vorliegende Recherchenbericht wurde für alle Patentansprüche erstellt.

| Recherchenort | Abschlußdatum der Recherche | Prüfer |
|---|---|---|
| DEN HAAG | 20-05-1987 | VANDEVENNE M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82